# EUROPEAN PATENT APPLICATION

(11) **EP 2 687 968 A2**
(43) Date of publication of application: **22.01.2014**
(21) Application number: 12177711.4
(22) Date of filing: 24.07.2012
(51) Int. Cl.: G06F 3/0488, G06F 3/023, G06F 1/16

(54) **A handheld device with ergonomic display features**

(30) Priority: 20.07.2012 US 201213554714
(71) Applicant: BlackBerry Limited, Waterloo, ON N2K 0A7 (CA)
(72) Inventor: Stovicek, Thomas Jan, Redwood City, CA California 94065 (US); Del Pasqua, Kieran Cloud, Mississauga, Ontario L4W 0B5 (CA); Abratowski, Przemyslaw, Mississauga, Ontario L4W 0B5 (CA)
(74) Representative: MERH-IP Matias Erny Reichl Hoffmann

(57) **Abstract**

A handheld device with ergonomic display features, and method there for, are provided. Data is provided at a rectangular touchscreen display. When the touchscreen display is in a landscape orientation, at least one taskbar is provided along at least a portion of one or more short edges of the touchscreen display. When the touchscreen display changed to a portrait orientation: the at least one taskbar is moved to a bottom one of the short edges, when no virtual keyboard is provided, the at least one taskbar is moved to a top one of the short edges when the virtual keyboard is provided at the bottom one of the short edges. Hence, ergonomic access is provided to controls most likely to be used when he touchscreen display is held towards the bottom.

## Description

### FIELD

The specification relates generally to handheld devices and specifically to a handheld device with ergonomic display features and method there for.

### BACKGROUND

The evolution of computers is currently quite active in the mobile device environment. It is now well-known to including calendaring, contacts, and messaging functions in mobile devices. More recently, there has been a veritable explosion of the number and type of applications that are configured to the unique form factors and computing environments of mobile devices. In particular, the ergonomics of reorienting applications between landscape and portrait orientations can be challenging.

### SUMMARY

An aspect of the specification provides a handheld device comprising: a touch screen display, the touch screen display being rectangular; a sensor for sensing an orientation of the touch screen display; and, a processor enabled to: process an application for providing data at the touch screen display; determine, via the sensor, when the touch screen display is in a landscape orientation or a portrait orientation; when the touch screen display is in the landscape orientation, provide at least one taskbar in the application along at least a portion of one or more short edges of the touch screen display; and when the touch screen display changes to the portrait orientation: move the at least one taskbar to a bottom one of the short edges, when no virtual keyboard is provided, and move the at least one taskbar to a top one of the short edges when the virtual keyboard is provided at the bottom one of the short edges.

The processor can be further enabled to: when the touch screen display is in the landscape orientation, provide two taskbars in the application at respective opposite short edges of the touch screen display, each of the two taskbars associated with a respective pane, and when the touch screen display changes to the portrait orientation, provide one pane of the two panes at the touch screen display, reoriented for the portrait orientation, an associated one taskbar of the two taskbars provided at the one pane.

The processor can be further enabled to: when the touch screen display is in the landscape orientation, provide two taskbars in the application at respective opposite short edges of the touch screen display, each of the two taskbars associated with a respective pane, and when the touch screen display changes to the portrait orientation, provide one pane of the two panes at the touch screen display, reoriented for the portrait orientation, and merge at least a portion of content of each of the two taskbars into a merged taskbar provided at the one pane.

The processor can be further enabled to: when the touch screen device is in the landscape orientation, position an icon of the at least one taskbar in a corner of the touch screen display and when the at least one taskbar is moved to the top one of the short edges in the portrait orientation, maintain the position of the icon in a corresponding corner in the at least one taskbar, the icon reoriented for the portrait orientation.

The application can comprise one or more of a PIM (personal information manager) application, a message application, a calendar application and a contacts application.

The handheld device can further comprise one or more of a tablet device and a telephony device.

The sensor can comprise one or more of an accelerometer, a magnetometer, a tilt sensor, and an inclinometer.

The processor can be further enabled to: when the touch screen display is in the landscape orientation, provide a plurality of panes, one pane of the plurality of panes comprising a content view, and when the touch screen display changes to the portrait orientation, provide the one pane reoriented for the portrait orientation and hiding others of the plurality of panes. The processor can be further enabled to reconfigure content of the one pane in the portrait orientation to a reading view, emphasizing text and deemphasising graphics. The application can comprise a browser application.

Another aspect of the specification provides a method comprising: at a handheld device comprising: a touch screen display, the touch screen display being rectangular; a sensor for sensing an orientation of the touch screen display; and, a processor; processing an application at the processor for providing data at the touch screen display; determining, via the sensor, when the touch screen display is in a landscape orientation or a portrait orientation; when the touch screen display is in the landscape orientation, providing, via the processor, at least one taskbar in the application along at least a portion of one or more short edges of the touch screen display; and when the touch screen display changes to the portrait orientation: moving, via the processor, the at least one taskbar to a bottom one of the short edges, when no virtual keyboard is provided, and moving, via the processor, the at least one taskbar to a top one of the short edges when the virtual keyboard is provided at the bottom one of the short edges.

The method can further comprise: when the touch screen display is in the landscape orientation, providing, via the processor, two taskbars in the application at respective opposite short edges of the touch screen display, each of the two taskbars associated with a respective pane, and when the touch screen display changes to the portrait orientation, providing, via the processor, one pane of the two panes at the touch screen display, reoriented for the portrait orientation, an associated one taskbar of the two taskbars provided at the one pane.

The method can further comprise: when the touch screen display is in the landscape orientation, providing, via the processor, two taskbars in the application at respective opposite short edges of the touch screen display, each of the two taskbars associated with a respective pane, and when the touch screen display changes to the portrait orientation, providing, via the processor, one pane of the two panes at the touch screen display, reoriented for the portrait orientation, and merge at least a portion of content of each of the two taskbars into a merged taskbar provided at the one pane.

The method can further comprise: when the touch screen device is in the landscape orientation, positioning, via the processor, an icon of the at least one taskbar in a corner of the touch screen display and when the at least one taskbar is moved to the top one of the short edges in the portrait orientation, maintaining the position of the icon in a corresponding corner in the at least one taskbar, the icon reoriented for the portrait orientation.

The application can comprise one or more of a PIM (personal information manager) application, a message application, a calendar application and a contacts application.

The method can further comprise: when the touch screen display is in the landscape orientation, providing, via the processor, a plurality of panes, one pane of the plurality of panes comprising a content view, and when the touch screen display changes to the portrait orientation, providing, via the processor, the one pane reoriented for the portrait orientation and hiding others of the plurality of panes. The method can further comprise reconfiguring, via the processor, content of the one pane in the portrait orientation to a reading view, emphasizing text and deemphasising graphics. The application can comprise a browser application.

Yet a further aspect of the specification provides a computer program product, comprising a computer usable medium having a computer readable program code adapted to be executed to implement a method comprising: at a handheld device comprising: a touch screen display, the touch screen display being rectangular; a sensor for sensing an orientation of the touch screen display; and, a processor; processing an application at the processor for providing data at the touch screen display; determining, via the sensor, when the touch screen display is in a landscape orientation or a portrait orientation; when the touch screen display is in the landscape orientation, providing, via the processor, at least one taskbar in the application along at least a portion of one or more short edges of the touch screen display; and when the touch screen display changes to the portrait orientation: moving, via the processor, the at least one taskbar to a bottom one of the short edges, when no virtual keyboard is provided, and moving, via the processor, the at least one taskbar to a top one of the short edges when the virtual keyboard is provided at the bottom one of the short edges.

### BRIEF DESCRIPTIONS OF THE DRAWINGS

For a better understanding of the various implementations described herein and to show more clearly how they may be carried into effect, reference will now be made, by way of example only, to the accompanying drawings in which:

Fig. 1 depicts handheld device in landscape and portrait orientations, with ergonomic display features, according to non-limiting implementations.

Fig. 2 depicts a schematic diagram of the handheld device of Fig. 1, according to non-limiting implementations.

Fig. 3 depicts a flowchart illustrating a method for controlling ergonomic display features at the handheld device of Fig. 1, according to non-limiting implementations.

Fig. 4 depicts the handheld device of Fig. 1 in a portrait orientation with ergonomic display features, according to non-limiting implementations.

Fig. 5 depicts the handheld device of Fig. 1 in landscape and portrait orientations with ergonomic display features in each orientation, according to non-limiting implementations.

Fig. 6 depicts a handheld device in landscape and portrait orientations with ergonomic display features in each orientation, according to non-limiting implementations.

Fig. 7 depicts a handheld device in landscape and portrait orientations with ergonomic display features in each orientation, according to non-limiting implementations.

Fig. 8 depicts a handheld device in landscape and portrait orientations with ergonomic display features in each orientation, according to non-limiting implementations.

Fig. 9 depicts a sequence provided at the handheld device of Fig. 8 in a portrait orientation with ergonomic display features, according to non-limiting implementations.

### DETAILED DESCRIPTION

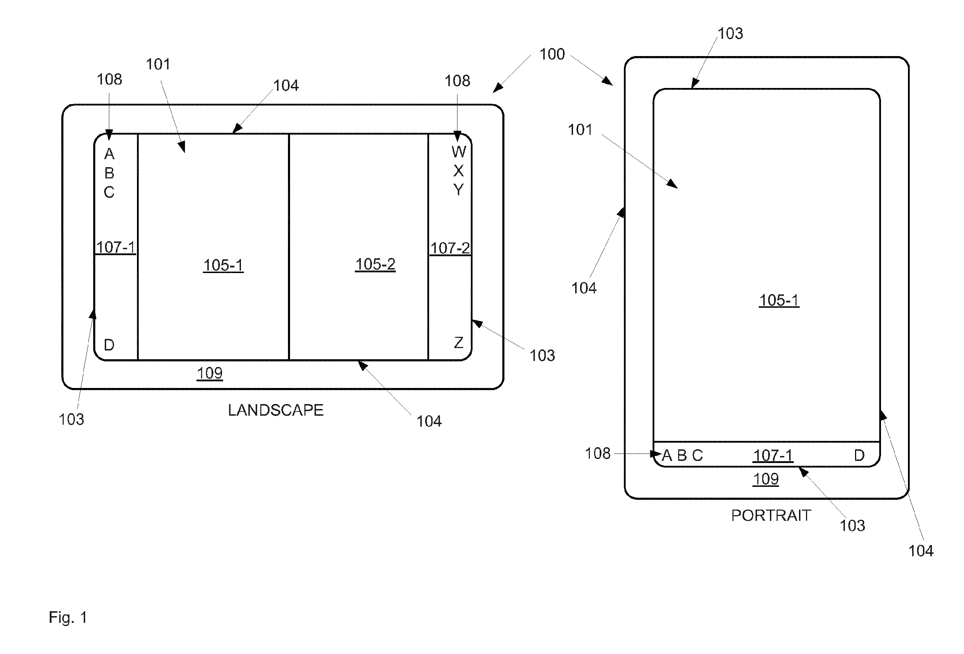

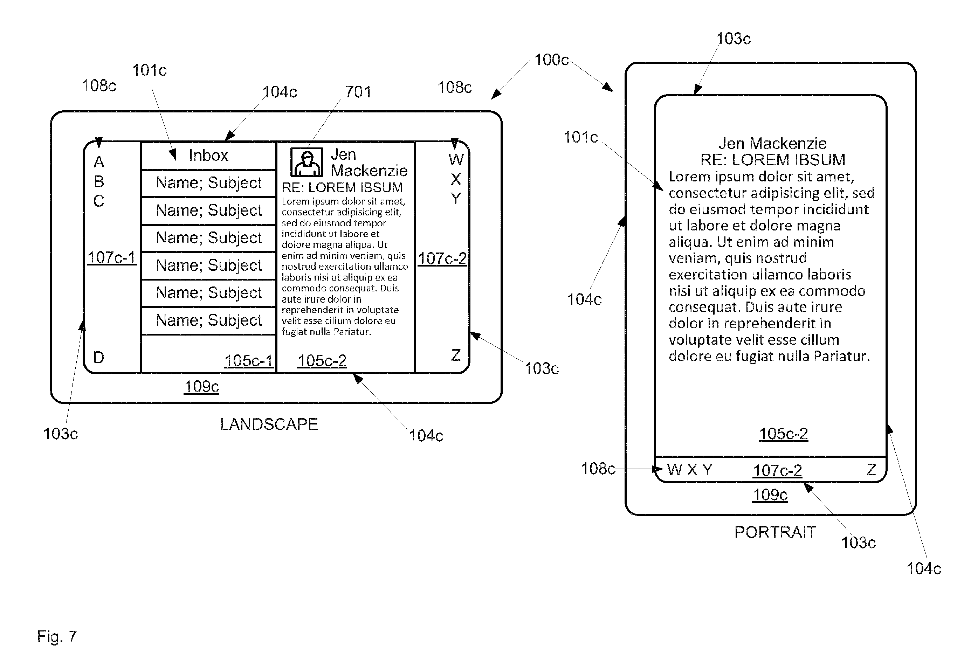

Fig. 1 depicts a handheld device 100 with ergonomic display features in both a landscape orientation and a portrait orientation, according to non-limiting implementations. Handheld device 100, also interchangeably referred to herein as device 100, comprises a touch screen display 101. It is appreciated that the touch screen display 101, interchangeably referred to hereafter as display 101, is generally rectangular and hence comprises two parallel short edges 103 and two long edges 104. Further, in the landscape orientation, device 100 is enabled to provide a rendering of one or more of a PIM (personal information manager) application, a message application, a calendar application and a contacts application at display 101. In the landscape orientation, two panes 105-1, 105-2 are provided at display 101 in the rendering of the application. For example, when the application comprises a messaging application, pane 105-1 can comprise a message list while pane 105-2 can comprise a content view comprising content of a selected message in the message list (for example, see Fig. 7 described below). Panes 105-1, 105-2 will hereafter be interchangeable referred to, generically, as a pane 105 and, collectively, as panes 105. Furthermore, each pane 105-1, 105-2 is associated with a respective taskbar 107-1, 107-2, hereafter interchangeably referred to generically as a taskbar 107 and collectively as taskbars 107.

Each taskbar 107 comprises at least one icon 108, depicted as icons A, B, C, D, W, X, Y, Z. Each icon 108 comprises an actuatable control for a function associated with one or more of a respective pane 105 and the associated application. For example, an icon A, B, C, D in taskbar 107-1 can comprise a control for adding an account to a messaging application, initiating a search of messages in a message list of pane 105-1 and the like. Similarly an icon W, X, Y, Z in taskbar 107-2 can comprise a control for replying to a message provided at pane 105-2, deleting the message and the like. It is appreciated, however, that the type of icons 108 and their associated functions are generally appreciated to be non-limiting and that while icons 108 are described with reference to functions associated with a messaging application, icons 108 can be associated with any suitable function for a respective application provided at display 101.

It is further appreciated that icons 108 can interchangeably referred to as graphical controls and that icons 108 can comprise a pictogram, text and/or a combination.

Further, while only four icons 108 per taskbar 107 are depicted at Fig. 1, it is appreciated that any suitable number of icons and/or graphical controls can be displayed at display 101.

Device 100 further comprises a housing 109 containing and/or surrounding display 101, and any other components, such as processors, memories and any associated electronics as described in further detail below. Housing 109 can comprise any suitable combination of metal, plastic and glass. As depicted, both display 101 and housing 109 are each rectangular, however, in other implementations, housing 109 can be different shape from display 101 and need not be rectangular. For example housing can be square, triangular, circular, or any other shape that can surround display 101.

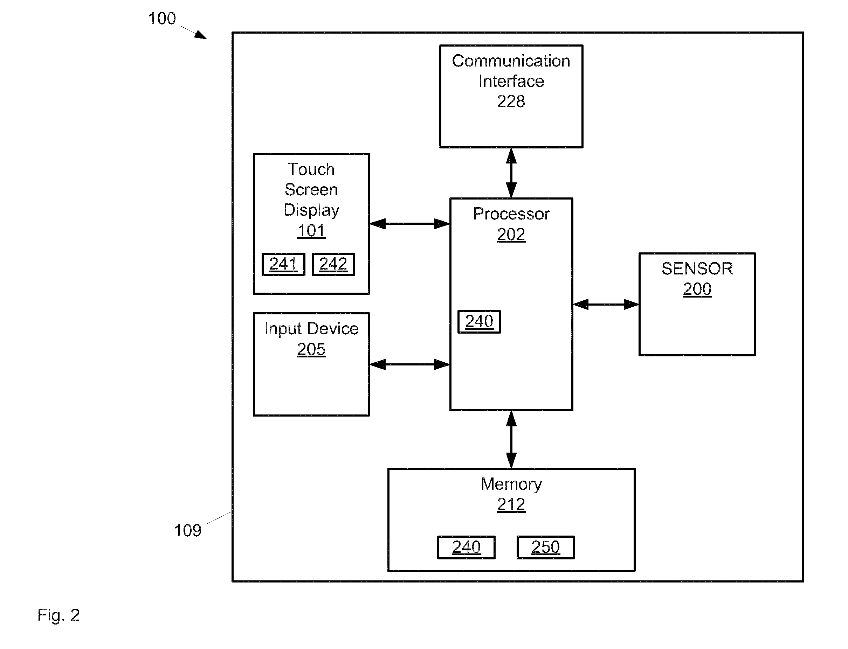

As depicted in Fig. 2, which shows a schematic diagram of handheld device 100, according to non-limiting implementations, device 100 further comprises a processor 202 interconnected with display 101, a sensor 200 for sensing an orientation of touch screen display 101, an optional input device 205, a memory 212 and optionally a communication interface 228. As will be described in further detail below, processor 202 is generally enabled to: determine, via sensor 200, when touch screen display 101 is in a landscape orientation and a portrait orientation; process an application 240 (e.g. stored at memory 212) for providing data at touch screen display 101; when touch screen display 101 is in the landscape orientation, as depicted in Fig.1, provide at least one taskbar 107 in application 240 along at least a portion of one or more short edges 103 of touch screen display 101; and when touch screen display 101 changes to the portrait orientation: move the at least one taskbar 107 to a bottom one of short edges 103, when no virtual keyboard is provided, and move the at least one taskbar to a top one of short edges 103 when the virtual keyboard is provided at the bottom one of the short edges 103. Hence, ergonomic access is provided to controls most likely to be used by the fingers when holding touch screen display 101 towards the bottom of touch screen display 101. Furthermore, for easy access is provided to at least one taskbar 107 by fingers holding touch screen display 101 at one or more of short edges 103 when at least one taskbar 107 is provided along at least a portion of one or more short edges 103 of touch screen display 101.

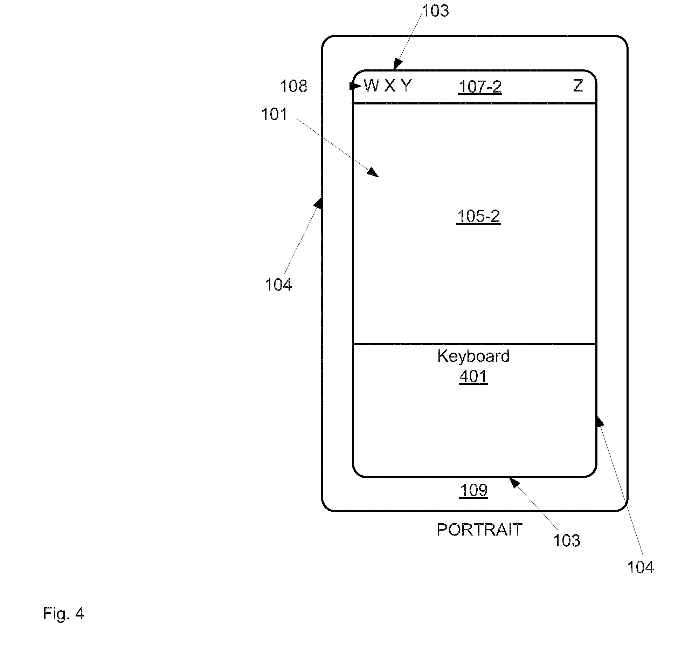

In other words, it is appreciated, when users hold devices with rectangular displays (such as device 100) in a landscape orientation, the users tend to hold the device along the short edges of a touch screen display; further, when users rotate such a device from a landscape to a portrait orientation, the users tend to hold the device towards the bottom of the touch screen display as a virtual keyboard are often presented at the bottom of the touch screen display, for example as depicted in Fig. 4. Further for applications that include taskbars, such as taskbars 107, the taskbars are not always ergonomically accessible and/or are positioned without taking into account the dynamic input needs of the application and/or whether a virtual keyboard is provided.

Hence, as will presently be described, present implementations address ergonomics of reorienting applications between landscape and portrait modes by providing ergonomic access to controls at display 101 most likely to be used by a user when holding device 100 in landscape or portrait orientations.

Device 100 can be any type of handheld electronic device that can be used in a self-contained manner to provide renderings of applications at display 101, and to receive associated input. Device 100 includes, but is not limited to, any suitable combination of handheld electronic devices, handheld communications devices, handheld computing devices, handheld laptop computers, portable electronic devices, mobile computing devices, portable computing devices, tablet computing devices, laptop computing devices, desktop phones, telephony devices, PDAs (personal digital assistants), cellphones, smartphones, e-readers, handheld internet-enabled appliances and the like. Other suitable handheld devices are within the scope of present implementations. Further, while present implementations will be described with reference to device 100 comprising one or more of a tablet device and a telephony device, it is appreciated that other devices are contemplated as described above.

Display 101 comprises a display device 241 and a touch screen panel 242, located on display device 241, and described in further detail below. Hence, it is appreciated that display 101 is generally enabled to render data associated application 240, including but not limited to panes 105, taskbars 107 and icons 108, and to receive input, specifically touch input. For example, when at least one of icon 108, touch input can be received at a region of display 101 corresponding to at least one of icon 108 causing a function associated with the at least one of icon 108 to be processed, for example by processor 202.

It should be emphasized that the structure of device 100 in Fig. 2 is purely an example, and contemplates a device that can provide renderings of applications, such as application 240, at display 101 in both landscape and portrait orientations. In some implementations, device 100 can comprise a tablet device, a telephone device a smartphone, and the like, and hence be used for wireless data communications (e.g. email, web browsing, text, and the like) and/or wireless voice (e.g. telephony), in addition to camera functions.

Sensor 200 comprises any suitable sensor for sensing an orientation and/or a change in orientation of display 101, including, but not limited to, one or more of an accelerometer, a magnetometer, a tilt sensor, and an inclinometer.

In some implementations, device 100 comprises at least one optional input device 205, in addition to display 101, input device 205 generally enabled to receive input data, and can comprise any suitable combination of input devices, including but not limited to a keyboard, a keypad, a pointing device, a mouse, a track wheel, a trackball, a touchpad, and the like. Other suitable input devices are within the scope of present implementations.

However, in other implementations, touch screen display 101 is enabled as the primary input device of device 100, and input device 205 may not be present (i.e. input device 205 is optional).

It is further appreciated that display 101 comprises display device 241 and touch screen panel 242. Display device 241 can include, but is not limited to, one or more of: CRT (cathode ray tube) and/or flat panel displays (e.g. LCD (liquid crystal display), plasma, OLED (organic light emitting diode) displays and the like). Touch screen panel 242 includes but is not limited to a capacitive touch screen panel, a resistive touch screen panel, and the like.

Display device 241 and touch screen panel 242 are generally aligned such that areas of display device 241 where icons 108 are displayed correspond to areas of touch screen panel 242 where touch input can be received to activate and/or select the corresponding functions.

In any event, input from display 101 (e.g. touch screen panel 242), and/or optional input device 205, is received at processor 202 (which can be implemented as a plurality of processors, including but not limited to one or more central processors (CPUs)). Processor 202 is configured to communicate with memory 212 which comprise a nonvolatile storage unit (e.g. Erasable Electronic Programmable Read Only Memory ("EEPROM"), Flash Memory) and a volatile storage unit (e.g. random access memory ("RAM")). Programming instructions that implement the functional teachings of device 100 as described herein are typically maintained, persistently, in memory 212 and used by processor 202 which makes appropriate utilization of volatile storage during the execution of such programming instructions. Those skilled in the art will now recognize that memory 212 is an example of computer readable media that can store programming instructions executable on processor 202. Furthermore, memory 212 is also an example of a memory unit and/or memory module.

Memory 122 generally stores application 240, corresponding to the application provided at Fig. 1 and described above. Hence, application 240 can comprise one or more of a PIM (personal information manager) application, a message application, a calendar application, and a contacts application. However, in other implementations, application 240 can comprise any other suitable application with associated taskbars, including but not limited to a browser application.

Memory 122 further stores an application 250 that, when processed by processor 202, enables processor 202 to: determine, via sensor 200, when touch screen display 101 is in a landscape orientation and a portrait orientation; process application 240 for providing data at touch screen display 101; when touch screen display 101 is in the landscape orientation, provide at least one taskbar 107 in application 240 along at least a portion of one or more short edges 103 of touch screen display 101; and when touch screen display 101 changes to the portrait orientation: move the at least one taskbar 107 to a bottom one of short edges 103, when no virtual keyboard is provided, and move the at least one taskbar to a top one of short edges 103 when the virtual keyboard is provided at the bottom one of the short edges 103.

Processor 202 can be further configured to communicate with display 101 to determine when touch input is received at touch screen panel 242 and process the associated functions accordingly as described above.

In depicted implementations, processor 202 also optionally connects to a network communication interface 228, referred to hereafter as interface 228, which can be implemented as one or more radios configured to communicate with one or more communication networks. In general, it will be appreciated that interface 228 is configured to correspond with network architecture that is used to implement one or more communication links to the one or more communication networks, including but not limited to any suitable combination of USB (universal serial bus) cables, serial cables, wireless links, cell-phone links, cellular network links (including but not limited to 2G, 2,5G, 3G, 4G+, and the like) wireless data, Bluetooth links, NFC (near field communication) links, WiFi links, WiMax links, packet based links, the Internet, analog networks, the PSTN (public switched telephone network), access points, and the like, and/or a combination.

It is appreciated that in the depicted implementation, housing 109 contains and/or surrounds display 101, sensor 200, processor 202, optional input device 205, memory 212, and optional communication interface 228.

It is further appreciated that device 100 can comprise any other suitable applications for operating and/or configuring device 100, including, but not limited to, camera applications, imaging applications, presentation applications, messaging applications, gaming applications and the like.

While not depicted, it is further appreciated that device 100 further comprises one or more of a power source, including but not limited to a battery and/or a connection to an external power source, including, but not limited to, a main power supply.

In any event, it should be understood that in general a wide variety of configurations for device 100 are contemplated.

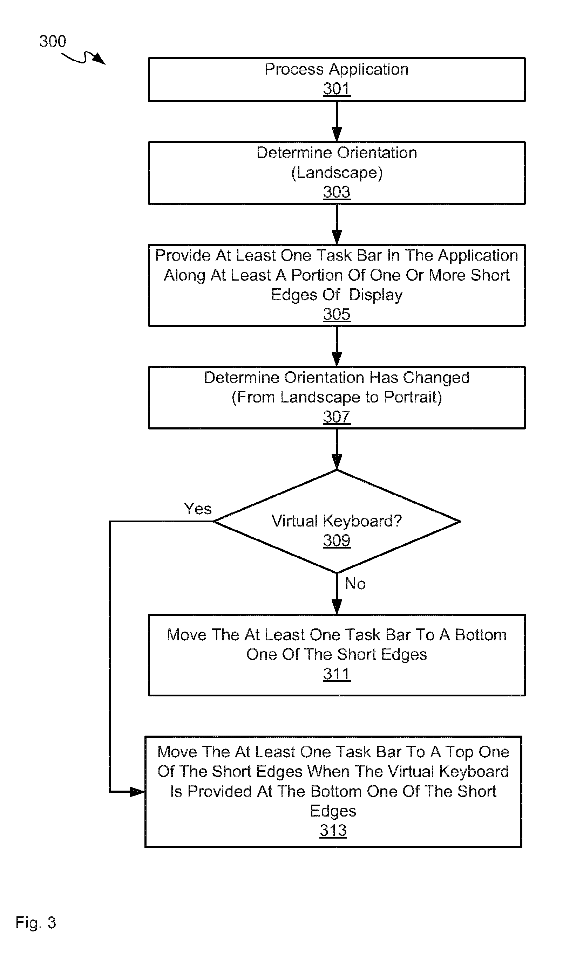

Hence attention is now directed to Fig. 3 which depicts a flowchart of a method 300, according to non-limiting implementations. In order to assist in the explanation of method 300, it will be assumed that method 300 is performed using device 100. Furthermore, the following discussion of method 300 will lead to a further understanding of device 100 and its various components. However, it is to be understood that device 100 and/or method 300 can be varied, and need not work exactly as discussed herein in conjunction with each other, and that such variations are within the scope of present implementations.

It is appreciated that, in some implementations, method 300 is implemented in device 100 by processor 202 processing application 250. Indeed, method 300 is one way in which device 100 can be configured. It is to be emphasized, however, that method 300 need not be performed in the exact sequence as shown, unless otherwise indicated; and likewise various blocks may be performed in parallel rather than in sequence; hence the elements of method 300 are referred to herein as "blocks" rather than "steps". It is also to be understood, however, that method 300 can be implemented on variations of device 100 as well.

It is further appreciated, in the following discussion, that when data is said to be displayed and/or rendered and/or provided at display 101, data is displayed and/or rendered and/or provided at display device 241; similarly, when data and/or input is said to be received at display 101, data and/or input is received at touch screen panel 242.

At block 301, processor 202 process application 240 for providing data at touch screen display 101, for example as depicted in Fig. 1.

At block 303, processor 202 determines, via sensor 200, when touch screen display 101 is in a landscape orientation or a portrait orientation. It is appreciated that processor 202 can communicate with sensor 200 to determine whether touch screen display 101 is in the landscape orientation or the portrait orientation by receiving orientation data, an orientation signal or the like from sensor 200. Further, it is assumed in depicted example implementations of method 300 that display 101 is in a landscape orientation.

It is yet further appreciated that block 301 and 303 can occur in any suitable order and/or in parallel: i.e. processor 303 can determine orientation prior to and/or during processing of application 240.

Hence, at block 305, when touch screen display 101 is in the landscape orientation, processor 202 provides at least one taskbar 107 in application 240 along at least a portion of one or more short edges 103 of touch screen display 101 as depicted in Fig. 1. When one pane 105 is provided in landscape orientation, only one respective taskbar 107 can be provided. When two panes 105 are provided in landscape orientation, respective taskbars 107 can be provided along respective short edges 103. Either way, as users tend to hold devices in landscape orientation along short edges, at least one taskbar 107 being provided along at least a portion of one or more short edges 103 provides easy and ergonomic access to taskbars 107 by fingers holding touch screen display at 101 at one or more of the short edges 103.

While taskbars 107 are depicted as extending along respective short edges 103 and between long edges 104, in other implementations taskbars 107 can extend along a portion of respective short edges 103 and hence taskbars 107 need not extend between long edges 104; further, taskbars 107 need not touch long edges 104.

At block 307, processor 202 further communicates with sensor 200 to determine that the orientation of display 101 has changed from a landscape orientation to a portrait orientation. In other words, device 101 has been turned by one or more of 90° and 270° from the "LANDSCAPE" orientation depicted on the left hand side of Fig. 1 to the "PORTRAIT" orientation depicted on the right hand side of Fig. 1.

Hence, when touch screen display 101 changes to the portrait orientation, at block 309 it is determined whether a virtual keyboard 401 is provided in the portrait orientation as described below with reference to Fig. 4.

When no virtual keyboard 401 is provided, at block 311, processor 202 moves at least one taskbar 107 to a bottom one of short edges 103, as depicted on the right hand side of Fig. 1. It is appreciated that, in these implementations, pane 105-1 is provided in the portrait orientation, but reoriented for the portrait orientation, while pane 105-2 is hidden. It is further appreciated that pane 105-2 can be accessed in the portrait orientation by receiving touch input data at display 101, for example swipe input data indicating that a next pane 105, currently hidden (i.e. pane 105-2) is to be provided at display 101, and a current displayed pane 105 (e.g. pane 105-1) is to be hidden. When the next pane 105-2 is provided, the associated taskbar 107-2 can be provided at a bottom of one of the short edges 103, unless virtual keyboard 401 is also provided (i.e. see the following description of block 313).

Returning to block 309, when virtual keyboard 401 is provided, at block 313, processor 202 moves at least one taskbar 107 to a top one of the short edges 103 when virtual keyboard 401 is provided at a bottom one of the short edges 103, For example, attention is directed to Fig. 4 which depicts display 101 in a portrait orientation, however in contrast to Fig. 1, in Fig. 4 pane 105-2 (rather than pane 105-1) is provided with associated taskbar 107-2 reoriented to a top short edge 103 of display. In other words, in these implementations, device 100 is enabled to provide pane 105-2 when display 101 changes orientation from landscape to portrait, rather than pane 105-1, and automatically provides keyboard 401. For example, in some of these implementations, pane 105-2 can comprise a message composition pane and keyboard 401 is automatically provided when display 101 is reoriented.

In yet other implementations, pane 105-2 can be provided in the portrait orientation without virtual keyboard 401, however, in these implementations, associated taskbar 107-2 is provided at a bottom one of short edges 103, as with taskbar 107-1 in Fig. 1. Hence, in these implementations, block 309 can further comprise determining which of panes 105 is to be provided in the portrait orientation, which of panes 105 are to be hidden, and whether or not virtual keyboard 401 is to be provided.

For example, at block 309 processor 202 can further determine which of panes 105 is to be provided in the portrait orientation, which of panes 105 is to be hidden, and order to provide panes 105 when swipe input data is received.

It is yet further appreciated that, in some implementations, a virtual keyboard can be provided in the landscape orientation, regardless of which pane 105 is to be provided in the portrait orientation. Hence, when the change from landscape to portrait orientations occurs, virtual keyboard 401 I provided along with the appropriate pane 105 in the portrait orientation, with the associated taskbar 107 provided at a top short edge of display 101, as in Fig. 4.

In any event, by providing a taskbar 107 at a bottom one of the short edges 103 when no virtual keyboard 401 is provided, and by providing a taskbar 107 at a top one of the short edges 103 when virtual keyboard 401 is provided, ergonomic access is thereby provided to controls most likely to be used by the fingers when holding touch screen display 101 towards the bottom of touch screen display 101.

While specific virtual keys of virtual keyboard 401 are not depicted for clarity, virtual keyboard 401 can comprise any suitable number of virtual keys arranged in any suitable order. In specific non-limiting implementations, virtual keyboard 401 comprises a QWERTY virtual keyboard. It is further contemplated that virtual keyboard 401 can be dynamic, with word suggestions provided in response to received key selection data. It is yet further contemplated that virtual keyboard 401 can comprise a plurality of virtual key layouts accessible by receiving touch input indicating switching between different layouts. For example, in some implementations, virtual keyboard 401 can be switched between a lower-case QWERTY virtual keyboard, an upper-case virtual keyboard, a number virtual keyboard and/or one or more symbol virtual keyboards. However, the type layout, and number of layouts of virtual keyboard 401 is appreciated to be non-limiting. Rather, virtual keyboard 401 is provided at a bottom of display 101 in the portrait orientation.

Furthermore, virtual keyboard 401 need not share an edge with the bottom short edge 103; for example, alternative implementations can comprise a gap between virtual keyboard 401 and a bottom short edge 103.

It is further appreciated that Figs. 1 and 3 are directed to specific example implementations where two panes 105 are provided and two associated taskbars 107 are provided at display 101. In other words, in these implementations, processor 202 is enabled to: when touch screen display 101 is in the landscape orientation, provide two taskbars 107 in application 130 at respective opposite short edges 103, each of two taskbars 107 associated with a respective pane 105, and when touch screen display 101 changes to the portrait orientation, provide one pane 105 of the two panes 105 at the touch screen display 101, reoriented for the portrait orientation, an associated one taskbar 107 of the two taskbars 107 provided at the one pane 105.

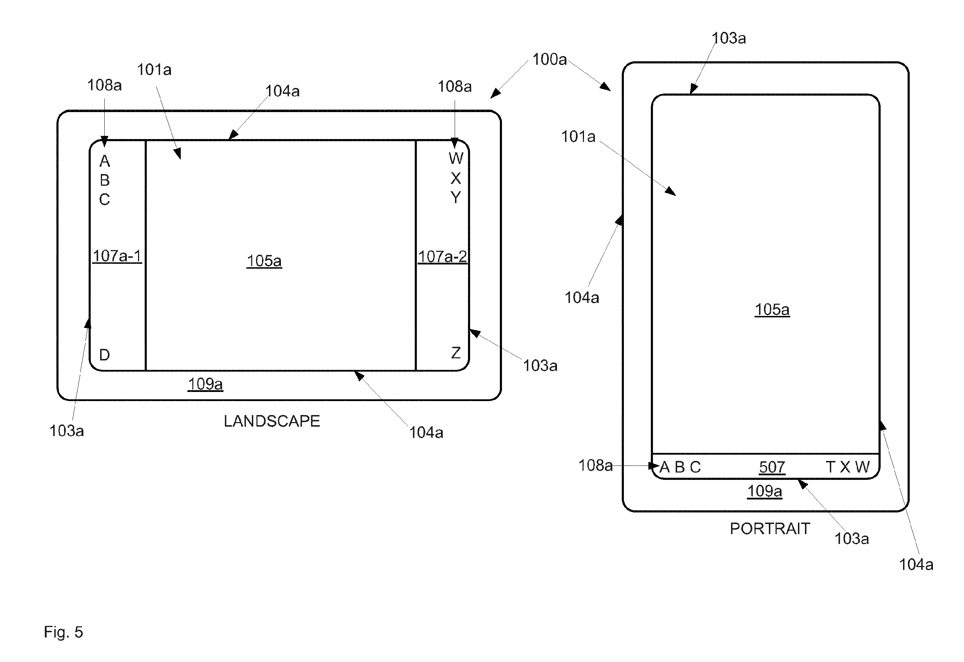

Alternative example implementations are depicted in Fig. 5, which is substantially similar to Fig. 1, with like elements having like numbers, however with an "a" appended thereto. For example, Fig. 5 depicts a device 100a similar to device 100, device 100a comprising a rectangular touch screen display 101a having short edges 103a and long edges 104a, surrounded by a housing 109a. It is further appreciated that, while not depicted, device 100a has a schematic structure similar to device 100 as depicted in Fig. 2; hence device 100a also comprises a processor, a sensor, a memory, and optionally an additional input device and an interface, each respectively similar to processor 202, sensor 200, memory 212, input device 205 and interface 228. However, in these implementations, in the landscape orientation, only a single pane 105a is provided, along with two associated taskbars 107a-1, 107a-2 adjacent opposite short edges 103a. Taskbars 107a-1, 107a-2 are interchangeably referred to hereafter, generically, as a taskbar 107a, and collectively as taskbars 107a. Each taskbar 107a comprises respective icons 108a, taskbar 107a-1 comprising icons A, B, C, D and taskbar 107a-2 comprising icons W, X, Y, Z.

In any event, when display 101a changes from a landscape orientation to a portrait orientation, pane 105a is provided in the portrait orientation, but reoriented for the portrait orientation. Further, taskbars 107a-1, 107a-2 are merged into a merged taskbar 507 provided at a bottom short edge 103a of display 101a, merged taskbar 507 comprising at least a portion of icons 108a from taskbar 107a-1, and at least a portion of icons 108a from taskbar 107a-2. For example, icons A, B, C, X and W are provided at taskbar 507, in addition to a new icon T. Icons D, Y and Z are not provided. However, it is appreciated that any portion of icons 108a can be provided in merged taskbar 507, and optionally new icons.

In addition, as a virtual keyboard is not provided, merged taskbar 507 is provided at a bottom short edge 103a.

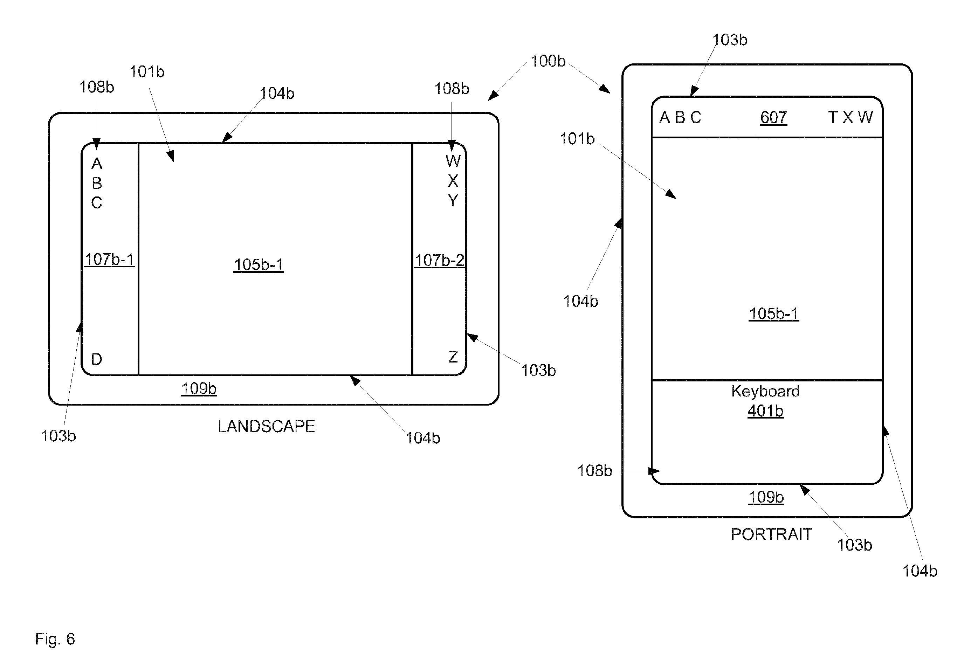

Further alternative example implementations are depicted in Fig. 6, which is substantially similar to Fig. 5, with like elements having like numbers, however with a "b" appended thereto rather than an "a". For example, Fig. 6 depicts a device 100b similar to device 100, device 100b comprising a rectangular touch screen display 101b having short edges 103b and long edges 104b, surrounded by a housing 109b. It is further appreciated that, while not depicted, device 100b has a schematic structure similar to device 100 as depicted in Fig. 2; hence device 100b also comprises a processor, a sensor, a memory, and optionally an additional input device and an interface, each respectively similar to processor 202, sensor 200, memory 212, input device 205 and interface 228.

However, at display 101b, a single pane 105b is provided, along with two associated taskbars 107b-1, 107b-2 adjacent opposite short edges 103b. Taskbars 107b-1, 107b-2 are interchangeably referred to hereafter, generically, as a taskbar 107b, and collectively as taskbars 107b. Each taskbar 107b comprises respective icons 108b, taskbar 107b-1 comprising icons A, B, C, D and taskbar 107a-2 comprising icons W, X, Y, Z.

In any event, when display 101b changes from a landscape orientation to a portrait orientation, pane 105b is provided in the portrait orientation, but reoriented for the portrait orientation. Further, a virtual keyboard 601, similar to virtual keyboard 401, is provided at a bottom of display 101b. Further, taskbars 107b-1, 107b-2 are merged into a merged taskbar 607 provided at a top short edge 103b of display 101b when virtual keyboard 607 is provided at the bottom short edge 103b of display 101b, merged taskbar 607 being substantially similar to merged taskbar 507 and comprising icons A, B, C, X and W and a new icon T.

Further, as virtual keyboard 601 is provided, merged taskbar 607 is provided at a top short edge 103a.

Fig. 6 illustrates a further aspect of present implementations: when touch screen device 101b is in the landscape orientation, a processor of device 101b positions icon A of taskbar 107b-1 in a corner of touch screen display 100b, for example the top-left hand corner, as depicted; and when taskbar 107b-1 is moved to the top short edge 103b in the portrait orientation, the processor of device 100b maintains the relative position of icon A in a corresponding corner of merged taskbar 607, icon A reoriented for the portrait orientation. In other words, when an icon 108b is a given corner in the landscape orientation, the position of the same given icon 108b is maintained in a corresponding corner in the portrait orientation: hence, in the depicted example, icon A is in the top-left hand corner of display 101b in the landscape orientation and icon A is also in the top-left hand corner in the portrait orientation. Further maintaining a relative position of an icon can occur regardless whether the associated taskbar is a merged taskbar or not.

Alternative example implementations are depicted in Fig. 7, which is substantially similar to Fig. 1, with like elements having like numbers, however with a "c" appended thereto. For example, Fig. 7 depicts a device 100c similar to device 100, device 100c comprising a rectangular touch screen display 101c having short edges 103c and long edges 104c, surrounded by a housing 109c. It is further appreciated that, while not depicted, device 100c has a schematic structure similar to device 100 as depicted in Fig. 2; hence device 100c also comprises a processor, a sensor, a memory, and optionally an additional input device and an interface, each respectively similar to processor 202, sensor 200, memory 212, input device 205 and interface 228.

Furthermore, in the landscape orientation, two panes 105c-1 105c-2 are provided, a respective taskbar 107c-1, 107c-2 associated with each of panes 105c-1, 105c-2, taskbars 107c-1, 107c-2 adjacent opposite short edges 103a. Panes 105c-1, 105c-2 are interchangeably referred to hereafter, generically, as a pane 105c, and collectively as panes 105c. Similarly, taskbars 107c-1, 107c-2 are interchangeably referred to hereafter, generically, as a taskbar 107c, and collectively as taskbars 107c. Each taskbar 107c comprises respective icons 108c, taskbar 107c-1 comprising icons A, B, C, D and taskbar 107c-2 comprising icons W, X, Y, Z.

In Fig. 7, however, details of each of panes 105c are depicted. For example, in these implementations, a processor of device 100c is processing a message application, and pane 105c-1 comprises an inbox/list of messages, each associated with a respective name and subject, while pane 105c-2 comprises a content view of one of the messages in the list, for example a selected message. It is appreciated that pane 105c-2 comprises the text of the message, as well as any associated graphics, such as graphic 701.

It hence further appreciated that, in Fig. 7, the processor of device 100c is enabled to: when touch screen display 101c is in the landscape orientation, provide a plurality of panes 105c, pane 105c-2 of the plurality of panes 105c comprising a content view (different from a message view, for example, the content view comprising content of a given item in a list and the like); and, when touch screen display 101c changes to the portrait orientation, provide the pane 105c-2 reoriented for the portrait orientation and hiding others of the plurality of panes 105c (i.e. pane 105c-1 is hidden).

In other words, in the portrait orientation, the processor of device 100c is enabled to provide pane 105c-2 comprising the content of the selected message. Furthermore, the processor of device 100c is further enabled to reconfigure the content of pane 105c-2 in the portrait orientation to a reading view, emphasizing text and deemphasising graphics. In other words, text of pane 105c-2 is provided in the portrait orientations, but graphics, such as graphic 701, is suppressed.

It is appreciated that not all graphics need be suppressed, and the processor of device 100c can be enabled to suppress only a portion of graphics. For example, in some implementations, a browser application can be provided in a landscape orientation (and in a single pane, with or without taskbars) with all associated graphics of a provided webpage, including but not limited to graphics associated with ads, graphics associated with headers, graphics associated with different windows, graphics embedded in associated text and the like. When display 101c is reoriented to the portrait orientation a portion of the browser graphics can be suppressed such that text is emphasized and graphics are deemphasized. For example, only graphics embedded in the text can be provided with all other graphics suppressed. Hence, rotating display 101c from the landscape orientation to the portrait orientation provides automatic access to a reading view. Hence, in these implementations, a sensed reorientation of display 101c causes an automatic switch to a reading view.

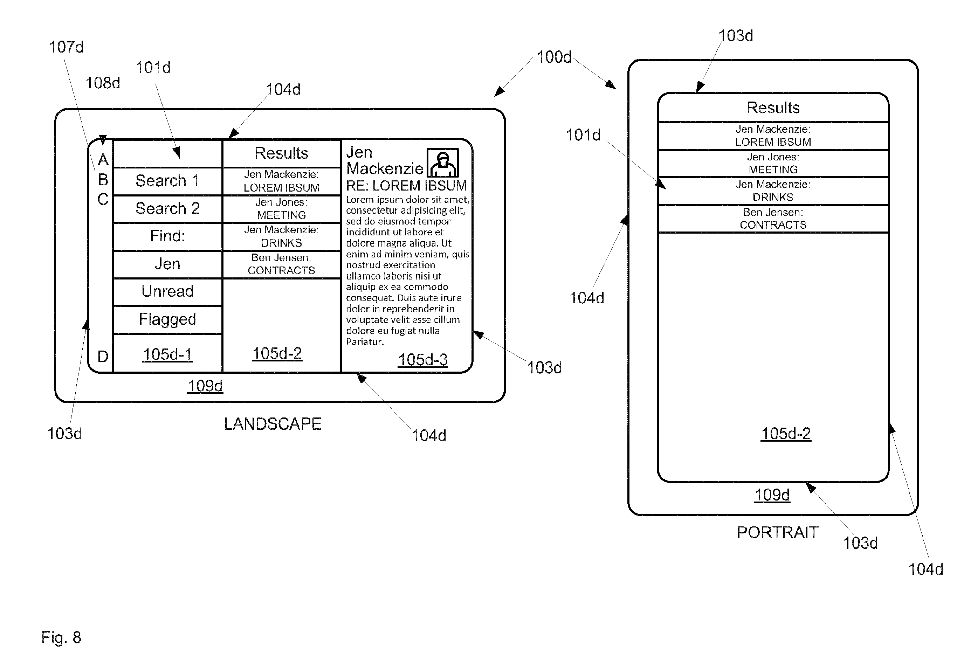

Attention is next directed to Fig. 8, which is substantially similar to Fig. 7 with like elements having like numbers, however with a "d" appended thereto rather than a "c". For example, Fig. 8 depicts a device 100d similar to device 100c, device 100d comprising a rectangular touch screen display 101d having short edges 103d and long edges 104d, surrounded by a housing 109d. It is further appreciated that, while not depicted, device 100d has a schematic structure similar to device 100 as depicted in Fig. 2; hence device 100d also comprises a processor, a sensor, a memory, and optionally an additional input device and an interface, each respectively similar to processor 202, sensor 200, memory 212, input device 205 and interface 228.

However, in these implementations, the landscape orientation, three panes 105d-1 105d-2, 105d-3 are provided, a respective taskbar 107d associated with pane 105d-1 at an adjacent short edge 103d. Panes 105d-1, 105d-2, 105d-3 are interchangeably referred to hereafter, generically, as a pane 105d, and collectively as panes 105d. Taskbar 107d comprises respective icons 108d, and specifically icons A, B, C, D.

In any event, in Fig. 8, device 100d is in search mode, with pane 105d-1 comprising options for conducting a search, and specifically a search of messages in a message application. The options in pane 105d-1 include, but are not limited to, a virtual button for access to a previous "Search 1", and a virtual button for access to a previous "Search 2", each of which, when actuated provide results of the respective previous searches in pane 105d-2. The options in pane 105d-1 further include, but are not limited to, virtual buttons for searching for "Unread" messages and "Flagged" messages. The options in pane 105d-1 further include, but are not limited to, a "Find:" option where text received in the area below is searched for at device 100d; in depicted non-limiting example implementations, the term "Jen" has been received and searched, with associated search results provided at pane 105d-2.

The search results for the term "Jen" provided in pane 105d-2 include messages that include the term "Jen". When one of these results are selected, the associated message is provided in pane 105d-3. For example, in depicted implementations, the top message in the search results has been selected and provided at pane 105d-3.

However, when display 101d is changed from landscape orientation to portrait orientation, pane 105d-2 is provided, reoriented for the portrait orientation: in other words, the processor of device 101d is enabled to provide search results when changing to the portrait orientation. Hence, in these implementations, a sensed reorientation of display 101d causes an automatic switch to a search results view. It is appreciated that the search results view is provided regardless of whether a taskbar is associated therewith or not.

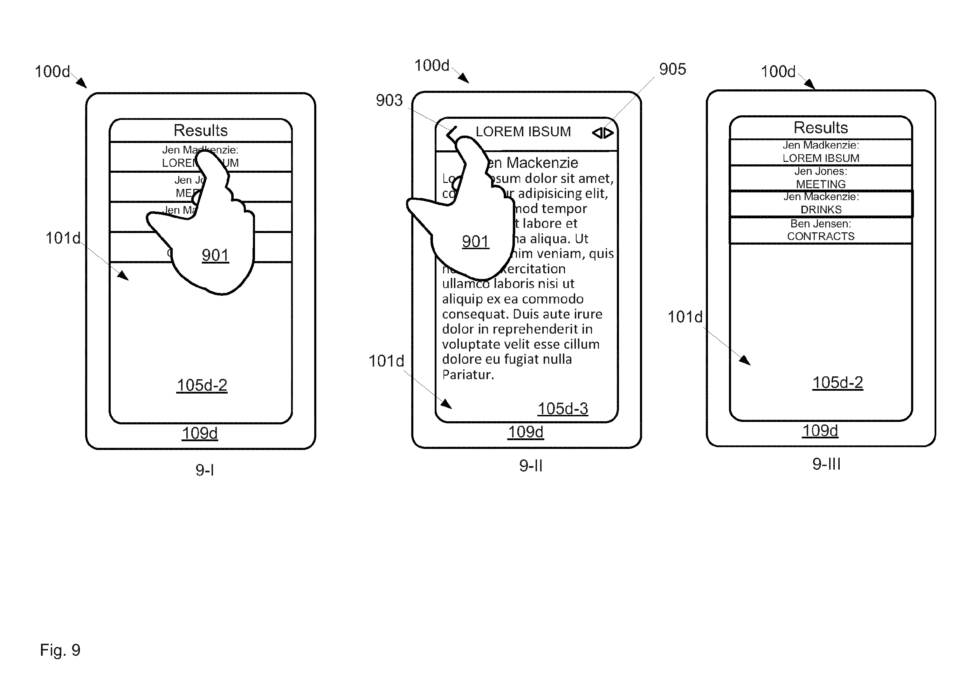

Attention is next directed to Fig. 9 which depicts a further aspect of device 100d: specifically Fig. 9 depicts a sequence that can occur at device 100d when display 101d is changed to a portrait orientation. At view 9-I, pane 105d-2 is provided in the portrait orientation, similar to that depicted at Fig. 8, thereby providing a search results view. However, touch input is received at display 101d indicating that the top message in the list of the search results view (e.g. via a finger of hand 901 touching the top message), resulting in view 9-II where the selected message is provided, similar to pane 105d-3 of Fig. 8. However, the view 9-II comprises a selectable option 903 indicating a "back" function", as will be presently described; it is appreciated that other selectable options can be provided, including but not limited to selectable options 905 indicating navigating functions for navigating the search results. For example when one or more of selectable options 905 are selected, a next or previous message in the message list is provided at view 9-II. Regardless, selectable option 903 is provided. When selectable option 903 is then selected, i.e. via touch input being received at display 101d indicating that selectable option 903 has been selected (e.g. via a finger of hand 901 touching selectable option 903), the search results view is again provided as in view 9-III, regardless of what is currently being provided, and what was previously provided at display 101d. Hence, when in a search mode, the processor of device 100d is enabled to always navigate back to a search results list when in the portrait orientation. In other words, various messages in the search results can be provided in any given sequence, but a "back" navigation command results in the search results view being again provided.

In any event, various ergonomic display features are described herein when switching a touch screen display from a landscape to a portrait view, which results in a reduction in fatigue and stress within the hands/and or fingers of a user. In other words, by providing at least one taskbar in application along at least a portion of one or more short edges the touch screen display when the touch screen display is in a landscape mode, and moving the at least one taskbar to a bottom one of short edges when the orientation changes to a portrait mode, and when no virtual keyboard is provided, and by further moving the at least one taskbar to a top one of short edges when the virtual keyboard is provided at the bottom one of the short edges, ergonomic access to controls most likely to be used by fingers holding touch screen display is provided, as the fingers holding the display are generally used to access the controls. In other words, present implementations cause the controls to be placed closest to where fingers are most likely to use them.

Those skilled in the art will appreciate that in some implementations, the functionality of handheld devices 100, 100a, 100b, 100c, 100d can be implemented using pre-programmed hardware or firmware elements (e.g., application specific integrated circuits (ASICs), electrically erasable programmable read-only memories (EEPROMs), etc.), or other related components. In other implementations, the functionality of handheld devices 100, 100a, 100b, 100c, 100d can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by anyone of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. A handheld device (100) comprising:
a touch screen display (101), the touch screen display (101) being rectangular;
a sensor (200) for sensing an orientation of the touch screen display (101); and,
a processor (202) enabled to:
process an application for providing data at the touch screen display (101);
determine, via the sensor (200), when the touch screen display (101) is in a landscape orientation or a portrait orientation;
when the touch screen display (101) is in the landscape orientation, provide at least one taskbar (107) in the application along at least a portion of one or
more short edges (103) of the touch screen display (101); and
when the touch screen display (101) changes to the portrait orientation:
move the at least one taskbar (107) to a bottom one of the short edges (103), when no virtual keyboard is provided, and
move the at least one taskbar (107) to a top one of the short edges (103) when the virtual keyboard is provided at the bottom one of the short edges (103).

2. The handheld device (100) of claim 1, wherein the processor (202) is further enabled to:
when the touch screen display (101) is in the landscape orientation, provide two taskbars (107) in the application at respective opposite short edges (103) of the touch screen display (101), each of the two taskbars (107) associated with a respective pane (105), and
when the touch screen display (101) changes to the portrait orientation, provide one pane (105) of the two panes (105) at the touch screen display (101), reoriented for the portrait orientation, an associated one taskbar (107) of the two taskbars (107) provided at the one pane (105).

3. The handheld device (100) of claim 1 or 2, wherein the processor (202) is further enabled to:
when the touch screen display (101) is in the landscape orientation, provide two taskbars (107) in the application at respective opposite short edges (103) of the touch screen display (101), each of the two taskbars (107) associated with a respective pane (105), and
when the touch screen display (101) changes to the portrait orientation, provide one pane (105) of the two panes (105) at the touch screen display (101), reoriented for the portrait orientation, and merge at least a portion of content of each of the two taskbars (107) into a merged taskbar (107) provided at the one pane (105).

4. The handheld device (100) of any previous claim, wherein the processor (202) is further enabled to: when the touch screen device is in the landscape orientation, position an icon of the at least one taskbar (107) in a corner of the touch screen display (101) and when the at least one taskbar (107) is moved to the top one of the short edges (103) in the portrait orientation, maintain the position of the icon in a corresponding corner in the at least one taskbar (107), the icon reoriented for the portrait orientation.

5. The handheld device (100) of any previous claim, wherein the processor (202) is further enabled to,
when the touch screen display (101) is in the landscape orientation, provide a plurality of panes (105), one pane (105) of the plurality of panes (105) comprising a content view, and
when the touch screen display (101) changes to the portrait orientation, provide the one pane (105) reoriented for the portrait orientation and hiding others of the plurality of panes (105).

6. The handheld device (100) of claim 5, wherein the processor (202) is further enabled to reconfigure content of the one pane (105) in the portrait orientation to a reading view, emphasizing text and deemphasising graphics.

7. The handheld device (100) of any of claims 1 to 6, further comprising one or more of a tablet device and a telephony device.

8. The handheld device (100) of any of claims 1 to 7, wherein the sensor (200) comprises one or more of an accelerometer, a magnetometer, a tilt sensor (200), and an inclinometer.

9. A method comprising:
at a handheld device (100) comprising: a touch screen display (101), the touch screen display (101) being rectangular; a sensor (200) for sensing an orientation of the touch screen display (101); and, a processor (202); processing an application at the processor (202) for providing data at the touch screen display (101);
determining, via the sensor (200), when the touch screen display (101) is in a landscape orientation or a portrait orientation;
when the touch screen display (101) is in the landscape orientation, providing, via the processor (202), at least one taskbar (107) in the application along at least a portion of one or more short edges (103) of the touch screen display (101); and
when the touch screen display (101) changes to the portrait orientation:
moving, via the processor (202), the at least one taskbar (107) to a bottom one of the short edges (103), when no virtual keyboard is provided, and
moving, via the processor (202), the at least one taskbar (107) to a top one of the short edges (103) when the virtual keyboard is provided at the bottom one of the short edges (103).

10. The method of claim 9, further comprising:
when the touch screen display (101) is in the landscape orientation, providing, via the processor (202), two taskbars (107) in the application at respective opposite short edges (103) of the touch screen display (101), each of the two taskbars (107) associated with a respective pane (105), and
when the touch screen display (101) changes to the portrait orientation, providing, via the processor (202), one pane (105) of the two panes (105) at the touch screen display (101), reoriented for the portrait orientation, an associated one taskbar (107) of the two taskbars (107) provided at the one pane (105).

11. The method of claim 9 or 10, further comprising:
when the touch screen display (101) is in the landscape orientation, providing, via the processor (202), two taskbars (107) in the application at respective opposite short edges (103) of the touch screen display (101), each of the two taskbars (107) associated with a respective pane (105), and
when the touch screen display (101) changes to the portrait orientation, providing, via the processor (202), one pane (105) of the two panes (105) at the touch screen display (101), reoriented for the portrait orientation, and merge at least a portion of content of each of the two taskbars (107) into a merged taskbar (107) provided at the one pane (105).

12. The method of any of claims 9 to 11, further comprising: when the touch screen device is in the landscape orientation, positioning, via the processor (202), an icon of the at least one taskbar (107) in a corner of the touch screen display (101) and when the at least one taskbar (107) is moved to the top one of the short edges (103) in the portrait orientation, maintaining the position of the icon in a corresponding corner in the at least one taskbar (107), the icon reoriented for the portrait orientation.

13. The method of any of claims 9 to 12, further comprising:
when the touch screen display (101) is in the landscape orientation, providing, via the processor (202), a plurality of panes (105), one pane (105) of the plurality of panes (105) comprising a content view, and
when the touch screen display (101) changes to the portrait orientation, providing, via the processor (202), the one pane (105) reoriented for the portrait orientation and hiding others of the plurality of panes (105).

14. The method claim 13, further comprising reconfiguring, via the processor (202), content of the one pane (105) in the portrait orientation to a reading view, emphasizing text and deemphasising graphics.

15. A computer program product, comprising a computer usable medium having a computer readable program code adapted to be executed to implement a method comprising:
at a handheld device (100) comprising: a touch screen display (101), the touch screen display (101) being rectangular; a sensor (200) for sensing an orientation of the touch screen display (101); and, a processor (202); processing an application at the processor (202) for providing data at the touch screen display (101);
determining, via the sensor (200), when the touch screen display (101) is in a landscape orientation or a portrait orientation;
when the touch screen display (101) is in the landscape orientation, providing, via the processor (202), at least one taskbar (107) in the application along at least a portion of one or more short edges (103) of the touch screen display (101); and
when the touch screen display (101) changes to the portrait orientation:
moving, via the processor (202), the at least one taskbar (107) to a bottom one of the short edges (103), when no virtual keyboard is provided, and
moving, via the processor (202), the at least one taskbar (107) to a top one of the short edges (103) when the virtual keyboard is provided at the bottom one of the short edges (103).
